# DEMANDE DE BREVET EUROPEEN

(11) **EP 3 128 486 A1**
(43) Date de publication de la demande: **08.02.2017**
(21) Numéro de dépôt: 15306276.5
(22) Date de dépôt: 06.08.2015
(51) Int. Cl.: G06T 11/00, G06T 11/60

(54) **PROCÉDÉ DE TRAITEMENT D'UNE IMAGE NUMÉRIQUE**

(71) Demandeur: Echalier, Bruno, 92500 Rueil-Malmaison (FR)
(72) Inventeur: Echalier, Bruno, 92500 Rueil-Malmaison (FR)
(74) Mandataire: GIE Innovation Competence Group

(57) **Abrégé**

L'invention concerne un procédé de traitement d'une image matricielle.

Il est essentiellement caractérisé en ce qu'il comprend des étapes consistant à :
vectoriser ladite image matricielle, et

L'une au moins des étapes parmi :
redimensionner ladite image vectorielle,
rastériser ladite image vectorielle éventuellement redimensionnée, et
redimensionner ladite image rastérisée.

## Description

### 1 DOMAINE DE L'INVENTION

La présente invention concerne le domaine du traitement d'image numérique, en particulier pour obtenir in fine une image numérique sous forme d'émoticône, c'est-à-dire la figuration simplifiée d'une émotion, d'un état d'esprit, d'un ressenti, d'une ambiance et/ou de son intensité, d'une attitude, utilisée notamment au milieu d'un écrit ; l'émoticône pouvant avantageusement être statique ou dynamique, et personnalisée.

En ce sens, la présente invention se distingue des émoticônes qui se présentent sous forme de caractères alphanumériques tels que par exemple les caractères :-) pour représenter un visage souriant.

Une émoticône au sens de la présente invention est donc une image numérique et non un ensemble de caractères alphanumériques.

De telles émoticônes sont connues, par exemple sous forme de « smileys », simples pastilles rondes, qui représentent chacun sous forme graphique très simplifiée une expression faciale donnée, avec un contenu informatif adapté en dimensions, couleurs etc. au contexte d'utilisation (écran de Smartphone, messagerie électronique, messagerie instantanée, réseaux sociaux, Facebook™, Twitter, Instagram, Périscope, Vine, etc.), logiciels de bureautique (traitements de textes, tableurs etc.)

D'autres types de smileys reprennent les smileys simples décrits ci-dessus et les agrémentent de mains, de pieds, d'accessoires, de symboles graphiques etc. Enfin d'autres types de représentations considérées couramment comme des émoticônes sont en fait des photographies agrémentées de signes graphiques (coeur, fleur, texte etc.). Dans ce dernier cas l'essentiel de la représentation est constituée de la photo numérique initiale donc poids très lourd.

### 2 LEXIQUE

Au sens de la présente invention, on entend par
3 - Poids : le nombre d'octets d'une image numérique (le format natif d'une photo étant généralement de quelques Méga-octets ou Mo),
4 - Codage des niveaux de couleur : Peut varier de 2 à 16.8 millions de couleurs (8 bits par couleur rouge, vert, bleu).
5 - Taille : le nombre de pixels en hauteur et en largeur d'une image numérique,
6 - Résolution : la résolution spatiale d'une image numérique en points par pouces (PPP ou DPI),
7 - Format : représentation informatique de l'image, associée à des informations sur la façon dont l'image est codée et fournissant éventuellement des indications sur la manière de la décoder et de la manipuler (par exemple GIFF, TIFF, jpg, BMP, etc.
8 - Dimension(s) : longueur et largeur d'une image numérique en mm*mm (inch*inch) qui résulte du couple (format/résolution) sur un écran d'affichage. La dimension d'une image numérique sur un écran d'affichage est modifiable par effet de zoom (facteur de grandissement). La dimension « nominale » d'une image est celle obtenue avec un facteur de grandissement de 1. Le rapport longueur/largeur du format photo numérique (ex-argentique) a un ratio de 1.5. Le ratio longueur/largeur des photos prises sur les média de type smartphone est de 1.33.

On notera que dans le monde vectoriel décrit ci-après, on ne peut plus parler de pixels stricto sensu, mais cette notion peut être utilisée pour une compréhension plus aisée de la présente invention. Une image vectorielle n'a pas d'équivalent « image » au sens propre, il y a nécessairement une interface de restitution qui pixellise. On considère que le format matriciel est analogique (une information par point), tandis que le vectoriel est mathématique.

Dans ce contexte, si les smileys évoqués ci-avant présentent l'avantage d'un poids généralement relativement faible, ils sont en revanche totalement génériques, c'est-à-dire non représentatifs du portrait facial ou en pied etc. de leur émetteur ou d'une autre personne.

A ce jour, une image numérique représentant l'expression faciale d'un hominoïde est généralement une image matricielle (ou bitmap), qui présente généralement, pour une définition d'affichage donnée, un poids très lourd, d'autant plus lourd que la résolution est élevée, ce qui pose notamment des problèmes de transmission électronique par exemple à partir de smartphone, par exemple en cas de couverture réseau GSM assez faible, de liaison Wifi à faible débit, etc. ou des problèmes d'utilisation ou encore de coût, par exemple en cas de limitation de flux web par certaines applications logicielles notamment sur certains objets communicants.

En outre, il peut se poser des problèmes d'encombrement des serveurs de stockage (par exemple pour des solutions de type « Cloud »), problème qui devient extrêmement préoccupant (2 milliards de photos par jour, de poids environ 1 Mégaoctets, soit de l'ordre de grandeur de 2 millions de milliards d'octets créés (2000 téraoctets), échangés et éventuellement stockés par jour et ce pour les seules photos ; ce qui pose également des problèmes de consommation électrique pour le fonctionnement des dits serveurs et de leur refroidissement. A noter que la résolution des capteurs optiques ne cesse d'augmenter et peut couramment atteindre ou dépasser 8 Méga-octets (Mo), ou Megabytes (MB).

Pour répondre à ces problèmes de transmission et de stockage de ces fichiers images très lourds, on peut prévoir de réduire le poids de ces images. Une façon est d'en réduire la dimension.

Cependant, la richesse de ces images bitmap fait aussi que, lorsqu'elles sont réduites à de petites dimensions, le contenu informatif est dégradé, par exemple les émotions représentées notamment par les traits du visage ne sont plus clairement lisibles, voire plus du tout. La lisibilité, c'est-à-dire l'interprétation subjective d'une image par l'oeil humain, est amoindrie.

La présente invention vise à proposer une solution permettant de créer une image numérique sous forme d'émoticône, c'est-à-dire une image numérique d'un hominoïde présentant une expression faciale, une expression corporelle, lisible, voire renforcée, interprétable par l'oeil humain dont le poids reste compatible avec une transmission fluide de ces données par SMS, ou en ligne par courrier électronique, réseau social, messagerie instantanée etc., de dimensions faibles, tout en restant « lisible » par l'oeil humain.

Pour atteindre ces objectifs on utilise une combinaison de traitements d'images bitmap, de vectorisation et de redimensionnement, ainsi qu'éventuellement de rastérisation.

Le redimensionnement des images permet d'insérer ces images, en l'espèce simplifiées, dans des sms par exemple. Avantageusement en passant par une séquence préalable de vectorisation, puis de rastérisation.

En effet, grâce à la vectorisation, l'image vectorielle peut être agrandie ou réduite à volonté, sans dégradation, sans effet d'escalier ou de pixellisation, puisque les courbes sont calculées à chaque valeur du redimensionnement choisi.

Grâce à cette caractéristique, l'image vectorielle obtenue peut être de contenu informatif visuel constant et de poids considérablement inférieur au poids de l'image matricielle initiale, et donc sans perte de fidélité (lisibilité).

A titre d'exemple une image matricielle de dimension typique 800*600 pixels, en codage sur 24 bits a un poids de 1.44 Mo. Si on considère la résolution courante d'un écran d'affichage de 17 pouces, soit 96 dpi par construction, la dimension optimale de l'image est, en 96 dpi, de 211.7 mm * 158,7 mm (8.33 inches * 6.25 inches). La réduction de cette image bitmap vers une dimension d'affichage de l'ordre de 1,33 cm * 1cm) rend celle-ci généralement complètement illisible (noire). Le contenu informatif de l'image matricielle initiale est donc perdu, et cela définitivement, en-deçà d'une certaine réduction.

Au contraire, grâce à l'invention, la vectorisation permet de transformer en courbes dans l'espace vectoriel les traits du visage du portrait ou les contours de la posture du sujet de l'image matricielle initiale. Grâce à cette étape de vectorisation, le contenu informatif d'un portrait, associé essentiellement aux éléments variants (décrits ultérieurement) de celui-ci, c'est-à-dire aux traits du visage représentés et à la position relative des segments de membres, est conservé lors d'un redimensionnement car ce sont ces traits du visage ou ces contours qui sont vectorisés.

Ainsi grâce à l'étape de vectorisation, une image matricielle peut être redimensionnée à volonté dans sa forme vectorielle sans perte de contenu informatif, ni de lisibilité, laquelle peut même être renforcée par rapport à la photographie initiale.

### RESUME DE L'INVENTION

Plus précisément, l'invention concerne selon un premier de ses objets un procédé de traitement d'une image numérique matricielle.

Il est essentiellement caractérisé en ce qu'il comprend des étapes consistant à :
- Vectoriser ladite image numérique matricielle,

L'une au moins des étapes parmi :
- redimensionner ladite image vectorielle,
- rastériser ladite image vectorielle éventuellement redimensionnée, et
- redimensionner ladite image rastérisée.

Dans un mode de réalisation, il comprend en outre une étape de décomposition de l'image matricielle en un ensemble de couches vectorisées.

On peut prévoir en outre une étape de traitement préalable de l'image matricielle comprenant comprend au moins l'une des étapes parmi :
- dé-saturer l'image matricielle,
- filtrer l'image matricielle,
- modifier les niveaux de luminosité de l'image matricielle en référence à des paramètres de référence enregistrés dans une mémoire,
- détecter et reconnaitre un visage, et
- détecter les contours du contenu de l'image matricielle.

On peut prévoir en outre une étape consistant à filtrer l'image vectorielle, pour, augmenter l'efficacité de l'invention, éliminer les détails inférieurs à une certaine taille qui n'apportent aucune information supplémentaire de contenu informatif visuel ou de « lisibilité ». voire en diminue l'impact visuel.

On peut prévoir en outre une étape consistant à détecter dans l'image matricielle au moins l'un des éléments parmi des éléments variants et des éléments invariants. Variants et invariants sont définis au paragraphe 50 et suivants.

On peut prévoir en outre une étape consistant à enregistrer dans une base de données, au moins l'un des éléments variants ou invariants détectés.

On peut prévoir en outre une étape consistant à remplacer dans l'image matricielle ou vectorielle, l'un au moins des éléments variants ou invariants détectés par un élément variant ou invariant, correspondants à une expression différente enregistré préalablement dans une base de données, ou bien calculés par le procédé de morphing décrit plus bas.

On peut prévoir en outre une étape consistant à enregistrer dans une mémoire sous forme de bibliothèque au moins l'un des ensemble parmi :
- un ensemble d'au moins une image matricielle,
- un ensemble d'au moins une image vectorielle, et
- un ensemble d'au moins une image vectorielle rastérisée.

On peut prévoir en outre une étape consistant à rendre ladite bibliothèque accessible à un logiciel de communication écrite, de type traitement de texte, réseau social, messagerie électronique, messagerie instantanée, ou communication pair à pair.

On peut prévoir en outre une étape consistant à associer une séquence audio à ladite image vectorielle rastérisée, par exemple en utilisant des logiciels existants de traducteurs vocaux de SMS.

On peut prévoir en outre des étapes consistant à :
- associer une image vectorielle rastérisée à un mot ou une expression écrite prédéfinie enregistrée dans une mémoire ;
- reconnaitre dans un texte ledit mot ou ladite expression écrite prédéfinie grâce à un logiciel de traitement de texte ; et
- introduire dans le texte ladite image vectorielle rastérisée associée, éventuellement en remplacement dudit mot ou de ladite expression écrite prédéfinie.

On peut prévoir en outre une étape de « morphing » consistant, par transformation pas à pas, à faire évoluer de façon dynamique une première image vers une deuxième image, dans lequel l'une au moins parmi ladite première image et ladite deuxième image est ladite image numérique matricielle ou ladite image numérique vectorisée.

On peut prévoir en outre une étape consistant à enregistrer sous forme d'image numérique matricielle ou d'image numérique vectorielle chaque image des étapes dudit morphing. Ce procédé permet en outre de créer, sans passer par l'étape de reconnaissance de variants et d'invariants, des expressions intermédiaires, par exemple entre un sourire et un profond dégoût, ou hurlement.

On peut prévoir en outre une étape de montage d'une séquence vidéo dans laquelle chaque image de la séquence vidéo est une image numérique matricielle traitée selon l'invention.

Enfin, l'invention concerne également un programme d'ordinateur comprenant des instructions de code de programme pour l'exécution des étapes du procédé selon l'invention, lorsque ledit programme est exécuté sur un ordinateur, par exemple sur un smartphone ou tout appareil pouvant exécuter des logiciels, ou soit en envoyant les données à traiter vers un serveur capable d'exécuter les étapes selon l'invention.

D'autres caractéristiques et avantages de la présente invention apparaîtront plus clairement à la lecture de la description suivante donnée à titre d'exemple illustratif et non limitatif et faite en référence aux figures annexées.

### DESCRIPTIF DES DESSINS

la figure 1A illustre une image matricielle initiale en couleurs,
la figure 1B illustre l'image matricielle de la figure 1A retraitée avec des filtres et des opérations usuelles connues de l'homme de l'art,
la figure 2A illustre l'image matricielle de la figure 1B vectorisée, et qui est la résultante de la superposition de la figure 2B et de la figure 2C, et dont la couche de blanc a été supprimée ;
la figure 2B illustre la décomposition de l'image vectorielle de la figure 2A en niveaux de gris ;
la figure 2C illustre la décomposition de l'image vectorielle de la figure 2A en couche de noirs ;
la figure 3 illustre la rastérisation de l'image de la figure 2C,
la figure 4 illustre l'image matricielle de la figure 3 redimensionnée,
la figure 5A illustre une image initiale, en l'espèce la même que celle de la figure 1A,
la figure 5B et la figure 5C illustrent l'image de la figure 5A, traitée et vectorisée,
la figure 5D illustre la figure 5G dans laquelle l'élément variant de la figure 6A a été ajouté,
la figure 5E illustre la figure 5G dans laquelle l'élément variant de la figure 6B a été ajouté,
la figure 5F illustre la figure 5G dans laquelle l'élément variant de la figure 6C a été ajouté,
la figure 5G illustre la figure 5C dans laquelle un élément variant (en l'espèce la bouche) a été supprimé,
la figure 6A illustre un élément variant,
la figure 6B illustre un élément variant,
la figure 6C illustre un élément variant,
la figure 7A illustre une image fabriquée par interpolation entre deux photos d'une séquence de 10 images ; et
la figure 7B illustre l'image de la figure 7A retraitée par vectorisation et dans laquelle les couches de gris et blanc ont été éliminées.

### DESCRIPTION DETAILLEE

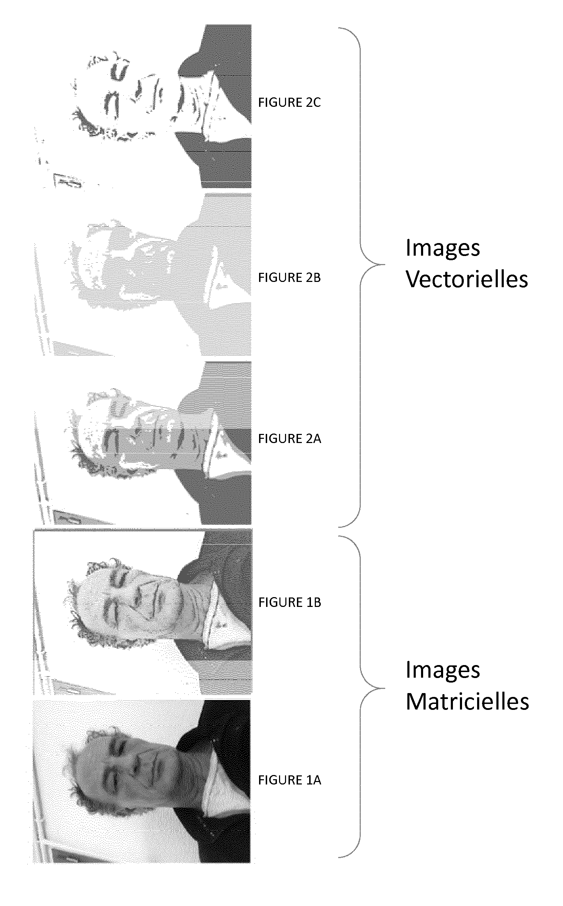

La présente invention concerne le traitement d'une image numérique matricielle dite « initiale ». Par exemple sur la figure 1A, l'image matricielle initiale est un portrait dont le poids est de 1.48 Mo, dont la définition est de 2448*3264 pixels, enregistrée et compressée au format JPG.

Elle peut avantageusement être mise en oeuvre par un objet communicant.

Par « objet communicant » on entend tout équipement mobile ou fixe, équipé d'un calculateur programmable, éventuellement d'un capteur optique relié au dit calculateur programmable et permettant de réaliser des photographies ou des vidéos (typiquement CCD ou webcam), d'un écran d'affichage, éventuellement capable de lire des fichiers photographiques ou vidéo sur un support DVD, carte mémoire, clef USB etc ; et susceptible d'établir une communication avec ou sans fil (GSM, GPRS, 3G, 4G, web, WIFI, Bluetooth ou autre).

On entend donc indistinctement par « objet communicant » tout type d'ordinateur individuel, téléphone intelligent ou *smartphone* par anglicisme, tablette tactile ou non tactile, PDA, etc. ; quel que soit le système d'exploitation de celui-ci (Android, iOS, Blackberry (marques déposées), etc.).

L'image numérique matricielle initiale peut représenter tout objet ou sujet. Cependant, dans le contexte des émoticônes, elle représente de préférence au moins un portrait humain, ce qui par concision sera le seul cas décrit ici.

Par « portrait » ci-après, on entend indifféremment portrait ou autoportrait, également appelé *selfie* par anglicisme.

Au sens de la présente invention, un portrait est une représentation d'une personne physique.

Ladite représentation comprend au moins l'un des composants parmi :
- une partie du visage de ladite personne, et/ou
- la posture, c'est-à-dire au moins une partie des membres inférieurs et/ou supérieurs de ladite 35personne dans une certaine position, chaque membre comprenant un ensemble de segments.

On peut considérer qu'un portrait comprend des éléments variants et des éléments invariants.

Les éléments variants sont les éléments mobiles dudit portrait qui, en fonction de leur forme ou de leur position (absolue ou relative), donnent un certain contenu informatif visuel subjectif, ci-après défini par « lisibilité ou interprétation » par l'oeil et le cerveau humain, c'est-à-dire une certaine expression.

Par exemple, pour un visage : la bouche, les sourcils, les lèvres, les rides, les paupières... sont des éléments variants. Pour une posture : les segments des membres inférieurs ou supérieurs sont des éléments variants.

Les éléments invariants sont les éléments peu ou pas mobile du portrait, qui ne participent pas ou peu au contenu informatif « émotionnel », c'est-à-dire à l'expression, et selon l'invention à fabriquer une emoticone personalisée.

Par exemple, pour un visage : les globes oculaires, les oreilles, le nez, les pommettes, le menton, la barbe, les cheveux, le buste, les bijoux... sont des éléments invariants.

Par concision, on ne décrira ici que le cas d'un objet communicant sous forme de téléphone intelligent, et où l'image numérique initiale est matricielle et relative à un portrait réalisé grâce au capteur optique dudit téléphone intelligent et enregistrée sur une mémoire de celui-ci.

Bien entendu, une image numérique matricielle initiale peut également être téléchargée sur une mémoire accessible audit objet communicant, par exemple par communication avec ou sans fil.

Enfin, par concision également, on considère que les images matricielles ou vectorielles décrites ici sont nécessairement numériques, le terme « numérique » est donc omis dans la description ci-dessous.

### PRETRAITEMENT IMAGE MATRICIELLE (BITMAP).

On peut traiter les images directement dans leurs représentations vectorielles comme décrit ci-après, mais l'expérience montre qu'il est avantageux de faire des traitements préalables de l'image matricielle initiale.

Préalablement à l'étape de vectorisation, on peut prévoir une étape consistant à prétraiter l'image matricielle initiale.

Par exemple la figure 1B retraité a un poids du fichier de 108 Kilo-octets (Ko), à comparer à la figure 1A de poids 1.48 Mo.

Le prétraitement peut être mis en oeuvre par le calculateur dudit objet communicant ou par un calculateur d'un serveur distant, en communication avec ledit objet communicant.

Dans ce cas, on peut prévoir une étape préalable consistant à uploader, c'est-à-dire transférer, ladite image matricielle initiale depuis ledit objet communicant vers ledit serveur distant.

De préférence, le traitement préalable à la vectorisation comprend au moins l'une des étapes parmi :
- désaturer l'image (c'est-à-dire à convertir l'image en noir et blanc),
- ajuster les niveaux de luminosité, et
- détecter les contours des objets/sujets présents sur l'image.

Le prétraitement peut être mis en oeuvre par logiciel, par exemple sur Adobe Photoshop™, avec les fonctions suivantes : Filtre/Contour/Contour accentué ; Filtre/Esthétique/Tracé des contours ; Calque de réglage/Seuil; ou encore avec le logiciel Gimp 2 : Désaturation (passage au Noir et Blanc) / Filtre artistique/dessin.

Un avantage du prétraitement est de réduire le poids de l'image matricielle, ce qui permet des calculs beaucoup plus rapides lors de la vectorisation.

### VECTORISATION

On prévoit de vectoriser l'image matricielle, préalablement traitée ou non, de sorte à obtenir une image vectorielle initiale.

L'étape de vectorisation peut être mise en oeuvre par tout logiciel de traitement d'image vectorielle existant sur le marché. La vectorisation permet de transformer les traits de l'image matricielle en un ensemble de courbes qui sont toutes, individuellement, définies par des points caractéristiques permettant de définir leur « équation » respective.

On peut prévoir que la vectorisation comprenne également une étape de décomposition de l'image matricielle initiale en un ensemble de couches (ou calques) vectorisées, par exemple 3 à 10 couches ou calques.

La décomposition en couches s'apparente à un traitement d'image qui joue sur les niveaux de gris, les contrastes etc. Le nombre de couches est paramétrable. On associe une couche vectorielle à une certaine représentation dont les niveaux de gris sont étagés entre du noir absolu et du blanc absolu. L'image vectorisée complète est alors une superposition de ces couches, à la manière de calques.

L'intérêt de cette décomposition en couches, ou calques, est d'extraire de l'image les traits caractéristiques les plus significatifs, de plus grande netteté et de lisibilité la plus avancée pour pouvoir ensuite réduire le poids de l'image à sa plus faible valeur.

Par exemple le poids de l'image de la figure 2A est de 96Ko, celui de la figure 2B et de la figure 2C de 48 Ko chacune. Pour les images 2A, 2B et 2C, la définition est de 480 x 640 px et la résolution de 89 dpi.

Moins l'image initiale est contrastée, plus il est avantageux d'augmenter le nombre de couches (niveaux de gris). Il y a beaucoup de moyens connus pour mesurer le contraste moyen ou local d'une photo. Les données chiffrées de mesure de contraste, calculées et affichées par exemple sur un appareil reflex , de répartition des noirs et des blancs, courbes de répartition des densités du noir vers le blanc (généralement calculées sur 256 niveaux du noir vers le blanc), peuvent servir dans l'invention à paramétrer le choix du nombre de couches à utiliser pour une photo donnée (par exemple une photo surexposée, sous exposée, faiblement contrastée etc.)

De préférence, on paramètre la vectorisation pour obtenir de 3 à 5 couches : une couche de noirs, 1 à 3 couches de niveaux de gris, une couche de blancs (ou couche de fond).

On peut avantageusement appliquer des filtres qui éliminent tous les détails inférieurs à une certaine surface prédéfinie (taille des détails calculés par des moyens mathématiques, ou courbes dont le rayon de courbure est inférieur à un certain seuil).

De préférence, on prévoit une étape consistant à supprimer la couche fond blanc de contenu informatif inutile. La suppression du blanc de fond rend l'image transparente ce qui présente un avantage lorsque l'image est affichée sur un écran dont la couleur de fond est imposée par une application donnée (bulle SMS par exemple). Il sera avantageux par la suite de conserver cette transparence, lorsque c'est possible, à travers les opérations suivantes, en particulier de reconversion en bitmap (rastérisation)

A la fin de l'étape de vectorisation en couches, on peut, de façon automatique, ne retenir comme image vectorielle pertinente pour l'invention que la couche des noirs. Ou bien par une sélection manuelle basée sur le visuel, la lisibilité.

### ELEMENTS VARIANTS

On peut prévoir une étape consistant à détecter et identifier les éléments variants de l'image matricielle (initiale ou finale) et/ou sur l'image vectorielle.

De préférence on prévoit au moins l'une des étapes parmi :
U ne étape de détection et de reconnaissance de visage, et
U ne étape de détection de contours.

De préférence on prévoit de détecter et identifier les contours des éléments invariants de l'image matricielle finale.

### BASE DE DONNEES

On peut prévoir une étape consistant à enregistrer dans une base de données, au moins l'un des éléments variants ou invariants détectés, pris individuellement ou par couple. Par « couple », on entend les éléments variants ou invariants qui vont naturellement par deux tels que par exemple les yeux, les oreilles, les lèvres, les paupières.

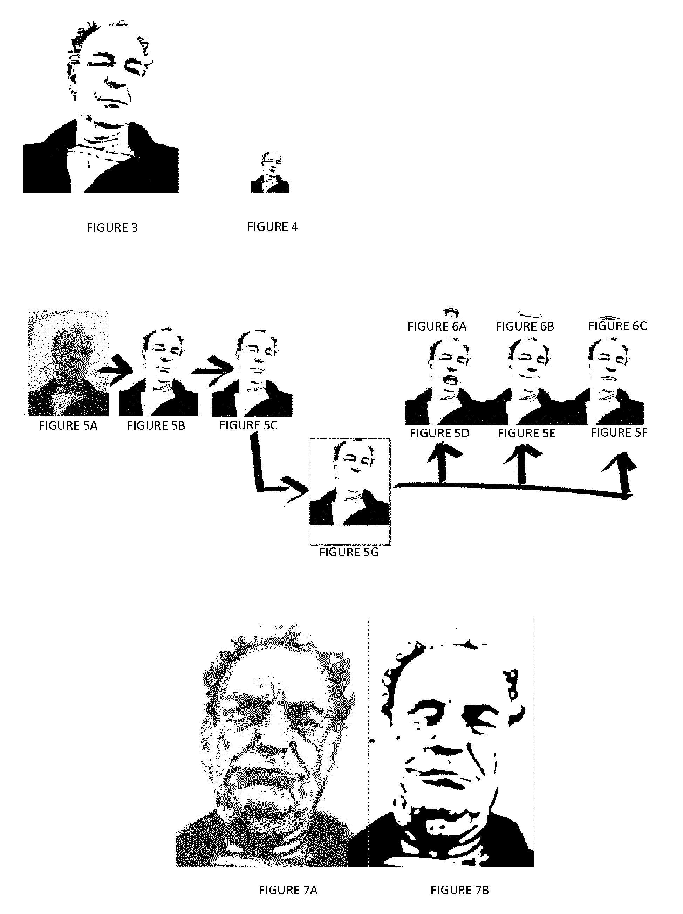

Les éléments variants et les éléments invariants enregistrés sont de préférence classés par catégories, chaque catégorie correspondant typiquement à un élément variant ou invariant donné, par exemple une catégorie « bouche », une catégorie « yeux », etc. Par exemple, trois expressions de bouche, en l'occurrence d'un même personnage, sont illustrées en figure 6A, 6B et 6C et représentent respectivement une bouche ouverte (figure 6A), une bouche fermée souriante (figure 6B) et une bouche fermée faisant la moue (figure 6C).

De préférence, l'étape consistant à enregistrer dans une base de données comprend une étape consistant à enregistrer un attribut ou un descriptif aux éléments variants ou invariants enregistrés. Par exemple l'attribut peut être descriptif d'une émotion telle que « content », « triste », « fatigué », etc.

La base de données peut comprendre une pluralité d'éléments variants ou d'éléments invariants par catégorie, émanant d'images d'un ou plusieurs individus, ce qui permet d'obtenir une pluralité d'éléments variants ou invariants individualisés.

La base de données peut comprendre une pluralité d'éléments variants ou d'éléments invariants par catégorie, émanant d'images synthétiques (par exemple par dessin), ce qui permet d'obtenir une pluralité d'éléments variants ou invariants génériques.

On peut prévoir une base de données pour les éléments variants et une autre base de données pour les éléments invariants.

Par exemple, la figure 5A illustre une image initiale qui est prétraitée (figure 5B, figure 5C) et vectorisée (figure 5G). Dans l'image vectorisée (figure 5G) un élément variant, en l'espèce la bouche, a été détecté et supprimé. Il est alors possible de remplacer l'élément variant détecté par un élément variant correspondant enregistré dans une base de données. En l'espèce la combinaison de l'image vectorisée (figure 5G) et d'une première expression de bouche (figure 6A) enregistrée dans une base de données est illustrée figure 5D ; la combinaison de l'image vectorisée (figure 5G) et d'une deuxième expression de bouche (figure 6B) enregistrée dans une base de données est illustrée figure 5E ; et la combinaison de l'image vectorisée (figure 5G) et d'une troisième expression de bouche enregistrée dans une base de données (figure 6C) est illustrée figure 5F. Pourquoi ne pas l'illustrer (figure en pièce jointe)

### MODIFICATION IMAGE

On peut prévoir une étape consistant à remplacer dans l'image matricielle finale l'un au moins des éléments variants ou invariants détectés par un élément variant ou invariant correspondant, enregistré préalablement dans la base de données et identifié par exemple grâce à sa catégorie et à son attribut, de manière similaire à la construction d'un portrait-robot.

Grâce à cette caractéristique, si une image matricielle finale comprend par exemple un visage souriant, il est possible d'identifier les lèvres, leur forme et leur position, et d'en déduire qu'il s'agit d'un sourire ; puis de remplacer ce sourire par un autre élément variant, par exemple des lèvres dans une autre forme, ce qui créé une autre expression, par exemple une moue.

Plus généralement, il est ainsi possible de remplacer l'un au moins des éléments variants ou l'un au moins des éléments invariants d'une image matricielle finale par des éléments variants ou des éléments invariants correspondants (c'est-à-dire de même catégorie) d'une seconde image, ladite seconde image étant par exemple une image matricielle finale au sens de la présente invention, c'est-à-dire dont les éléments variants ou invariants ont été préalablement enregistrés dans la base de données.

Lorsque la base de données comprend une pluralité d'éléments variants ou invariants par catégorie, on prévoit de préférence des étapes consistant à :
- afficher sur un écran d'affichage l'ensemble des éléments variants, invariants ou couple d'éléments de la catégorie, et
- sélectionner l'un au moins des éléments variants, invariants ou couple d'éléments, parmi ladite catégorie.

### DETECTION DES VARIANTS

De préférence, on prévoit une étape consistant à détecter les variants du visage de l'image matricielle initiale ou de l'image retraitée finale.

On peut prévoir une étape consistant à remplacer au moins un des variants détectés par un variant correspondant préenregistré dans une mémoire ou une base de données.

### RASTERISATION

A tout moment, on peut prévoir une étape consistant à rastériser l'image vectorielle, ce qui permet de retrouver une image matricielle, éventuellement colorisée.

Au sens de la présente invention, on entend par « image matricielle finale », l'image vectorielle, issue du traitement selon l'invention, rastérisée.

A titre d'exemple, avec une image matricielle initiale réalisée grâce à un objet communicant et dont le poids est supérieur au méga octet, il est possible d'obtenir une image matricielle finale dont le poids est de quelques Kilo-octets (Ko) tout en conservant l'expression du visage du portrait lisible, c'est-à-dire tout en restant expressif et ressemblant.

Par exemple l'image de la figure 3, qui est la rastérisation de l'image vectorielle représentée sur la figure 2C a une définition de 1535 x 2362 px, une résolution de 300 dpi et une taille de 13 x 20 cm pour un poids de 100Ko au format PNG.

L'image matricielle finale peut avantageusement être considérée comme une émoticône personnalisée.

Elle peut avantageusement être redimensionnée, alternativement ou en combinaison au redimensionnement de l'image vectorielle.

Par exemple l'image de la figure 4 est l'image de la figure 3 redimensionnée. Elle a une définition de 115 x 177 px codé sur 1 bit (Noir et blanc), une résolution de 300 dpi et une taille de 0.97 x 1.5 cm pour un poids de 2,03 Ko au format PNG.

Entre l'image de la figure 1 et celle de la figure 4, on a donc un rapport de poids de l'ordre de 1/720, pour un contenu informatif visuel extrêmement fidèle dans une dimension d'affichage compatible avec un SMS, Twitter, Facebook, Instagram, Vine, Periscope, etc. Une image matricielle initiale de 8 Mo a pu être facilement traitée selon l'invention, puis rastérisée au format png avec un poids de 4.5 Ko, soit un facteur de réduction de 1800.

### BIBLIOTHEQUE.

De préférence on prévoit une étape consistant à enregistrer dans une mémoire, par exemple sous forme de bibliothèque ou de base de données, et de préférence dans la même base de données que celle des éléments variants ou invariants, au moins l'un des ensemble parmi :
- un ensemble d'au moins une image matricielle initiale,
- un ensemble d'au moins une image vectorielle, et
- un ensemble d'au moins une image matricielle finale.

Par exemple, une image matricielle initiale de ladite bibliothèque ou base de données peut être téléchargée depuis un serveur distant, ou enregistrée à la volée lors d'une prise de vue par le capteur optique dudit objet communicant, ou encore téléchargée depuis une carte mémoire insérée dans un lecteur dudit objet communicant.

Avantageusement, on prévoit une étape consistant à rendre la bibliothèque accessible, par exemple sous forme de police de caractères, de barre d'outils, d'application logicielle, plugin, module ou autre, à tout logiciel de communication de l'objet communicant, par exemple de type traitement de texte, réseau social, messagerie électronique, messagerie instantanée, ou communication pair à pair, etc.

On peut prévoir une étape consistant à rendre la bibliothèque accessible à tout objet communicant, éventuellement de façon sécurisée.

### MORPHING ET ANIMATION

Ces modes d'expressions visuels sont particulièrement adaptés à des réseaux sociaux comme Vine et Periscope dont l'objet est la communication par vidéo.

Il est fait largement usage dans la vie courante de prise de vidéos qui peuvent s'échanger par des objets communicants. Toutefois le poids des fichiers vidéos est tel qu'il est difficile (voire impossible en cas de mauvaise couverture internet 3G, 4G, Edge) et très consommateur de forfaits opérateur et d'encombrement des serveurs de les échanger à distance par smartphone par exemple, à l'exception relative du Bluetooth dont la portée est limitée à quelques décimètres.

On peut prévoir une étape de morphing, 2D ou 3D, consistant à créer, par exemple par interpolation, ou discrétisation par des logiciels de maillage et calcul par éléments finis, une série d'images vectorielles ou matricielles permettant de faire évoluer de façon dynamique une première image (par exemple une photographie faciale d'expression joyeuse) vers une deuxième image (par exemple une photographie exprimant un cri, un rire ou même un animal, par exemple un lion rugissant), enregistrée préalablement dans une mémoire et de préférence dans ladite bibliothèque ou ladite base de données, et obtenir une émoticône personnalisée animée.

Par morphing 3D, on entend une construction 2D donnant l'impression de 3 dimensions à partir d'images d'un sujet (personnage, animal, objet etc.) pris de face et de divers profils.

Le morphing peut par exemple être enregistré en format AVI, GIF ou SWF, etc. On peut aussi enregistrer image par image les étapes de la transformation, ce qui, par ailleurs, est un moyen de fabriquer des émoticônes personnalisées intermédiaires, comme déjà dit plus haut. Des essais réalisés par le demandeur ont abouti à une séquence de 3 secondes de film interpolé entre 3 photos à 10 images/secondes pour un poids de 61 Ko.

Il est fréquent que les images interpolées soient un mélange de gris, noir et blanc. La capture d'écran de la figure 7A montre une image fabriquée par interpolation entre deux photos sur une séquence de 10 images ; l'image de la figure 7B est l'image de la figure 7A retraitée par vectorisation et dans laquelle les couches de gris et blanc ont été supprimées (en l'espèce grâce au logiciel Inkscape*™*).

On peut prévoir aussi une séquence d'émoticônes personnalisées animées à partir d'une séquence vidéo comprenant une pluralité d'images vidéo, par exemple un film pris grâce au capteur optique de l'objet communicant.

Dans ce cas, on peut prévoir de sélectionner au moins deux images vidéo de la séquence vidéo, et de générer une séquence de morphing selon l'invention pour chaque couple d'images vidéo sélectionnées. L'intérêt étant de réduire considérablement le poids de la séquence vidéo finale. On pourra choisir un débit d'image, par exemple 10 images/seconde. Voire moins.

Toutes les images vidéo de la séquence vidéo peuvent être sélectionnées.

De préférence, on prévoit d'enregistrer la séquence vidéo d'images vectorielles générées, éventuellement rastérisées, dans une mémoire accessible à l'objet communicant.

On peut prévoir que l'étape de morphing comprenne une étape consistant à faire coïncider les coordonnées d'un ensemble d'au moins un élément variant de la première image vectorielle avec les coordonnées de l'élément variant correspondant de la deuxième image vectorielle.

En fonction des paramètres de prétraitement, de vectorisation et de dimensionnement, il est ainsi possible de réduire sensiblement le poids d'une séquence vidéo.

Des essais réalisés par le demandeur sur la transformation d'une séquence vidéo de 10 images / seconde en « dessin animé », c'est-à-dire génération d'une séquence d'images bitmap, puis vectorisées et traitées selon l'invention puis rastérisées en format jpg ont abouti à un ratio de poids de 1/50 environ.

### SONORISATION

On peut prévoir une étape consistant à associer une séquence audio à une émoticône personnalisée, animée ou non, et obtenir une émoticône personnalisée sonorisée, éventuellement animée.

L'association peut être réalisée grâce à un logiciel de montage vidéo, ce qui permet avantageusement de définir l'instant de départ de la séquence audio.

Une séquence audio est un fichier informatique dont le contenu comprend par exemple l'un au moins des éléments suivants : un son, un bruit, une musique, une voix, un slogan, etc.

Une séquence audio peut être obtenue par enregistrement, par un logiciel utilisant la synthèse vocale, ou bien encore enregistrée en même temps que la prise de vidéo initiale servant de support à la fabrication d'une émoticône personnalisée animée.

En particulier on peut prévoir que le fichier informatique de séquence audio est généré grâce à un logiciel d'enregistrement audio, de type dictaphone, installé sur l'objet communicant.

Le fichier informatique de séquence audio peut être enregistré dans une mémoire de l'objet communicant, ou dans une mémoire d'un serveur distant puis téléchargé sur celui-ci.

### RECONNAISSANCE AUTOMATIQUE DE TEXTE

Dans le cas où l'objet communicant est équipé d'un logiciel de traitement de texte comprenant un « moteur de recherche », on peut prévoir une étape consistant à intégrer la bibliothèque d'émoticônes personnalisées audit « moteur de recherche », par exemple grâce aux attributs ou descriptifs des éléments variants ou invariants enregistrés dans la base de données.

Grâce à cette caractéristique, il est possible d'associer automatiquement une émoticône personnalisée (animée ou non, sonorisée ou non) à un mot ou une expression écrite, reconnue grâce au logiciel de traitement de texte.

## Revendications

1. Procédé de traitement d'une image matricielle,
**caractérisé en ce qu'**il comprend des étapes consistant à :
- vectoriser ladite image matricielle,
L'une au moins des étapes parmi :
- redimensionner ladite image vectorielle,
- rastériser ladite image vectorielle éventuellement redimensionnée, et
- redimensionner ladite image rastérisée.

2. Procédé selon la revendication 1, comprenant en outre une étape de décomposition de l'image matricielle en un ensemble de couches vectorisées.

3. Procédé selon l'une quelconque des revendications précédentes, comprenant en outre une étape de traitement préalable de l'image matricielle comprenant comprend au moins l'une des étapes parmi :
- dé-saturer l'image matricielle,
- filtrer l'image matricielle,
- modifier les niveaux de luminosité de l'image matricielle en référence à des paramètres de référence enregistrés dans une mémoire,
- détecter et reconnaitre un visage, et
- détecter les contours du contenu de l'image matricielle.

4. Procédé selon l'une quelconque des revendications précédentes, comprenant en outre une étape consistant à filtrer l'image vectorielle pour en éliminer les détails superflus

5. Procédé selon l'une quelconque des revendications précédentes, comprenant en outre une étape consistant à détecter dans l'image matricielle au moins l'un des éléments parmi des éléments variants et des éléments invariants.

6. Procédé selon la revendication 5, comprenant en outre une étape consistant à enregistrer dans une base de données, au moins l'un des éléments variants ou invariants détectés.

7. Procédé selon l'une quelconque des revendications 2 à 6, comprenant en outre une étape consistant à remplacer dans l'image matricielle, éventuellement rastérisée, l'un au moins des éléments variants ou invariants détectés par un élément variant ou invariant correspondant, enregistré préalablement dans une base de données.

8. Procédé selon l'une quelconque des revendications précédentes, comprenant en outre une étape consistant à enregistrer dans une mémoire sous forme de bibliothèque au moins l'un des ensemble parmi :
- un ensemble d'au moins une image matricielle,
- un ensemble d'au moins une image vectorielle, et
- un ensemble d'au moins une image matricielle rastérisée.

9. Procédé selon la revendication 8, comprenant en outre une étape consistant à rendre ladite bibliothèque accessible à un logiciel de communication écrite, de type traitement de texte, réseau social, messagerie électronique, messagerie instantanée, ou communication pair à pair.

10. Procédé selon l'une quelconque des revendications précédentes, comprenant en outre une étape consistant à associer une séquence audio à ladite image vectorielle rastérisée.

11. Procédé selon l'une quelconque des revendications précédentes, comprenant en outre des étapes consistant à :
- associer une image vectorielle rastérisée à un mot ou une expression écrite prédéfinie enregistrée dans une mémoire ;
- reconnaitre dans un texte ledit mot ou ladite expression écrite prédéfinie grâce à un logiciel de traitement de texte ; et
- introduire dans le texte ladite image vectorielle rastérisée associée, éventuellement en remplacement dudit mot ou de ladite expression écrite prédéfinie.

12. Procédé selon l'une quelconque des revendications précédentes, comprenant en outre une étape de morphing ou de montage vidéo consistant à faire évoluer de façon dynamique une première image vers une deuxième image, dans lequel l'une au moins parmi ladite première image et ladite deuxième image est ladite image matricielle ou ladite image vectorisée.

13. Procédé selon la revendication 12, comprenant en outre une étape consistant à enregistrer sous forme d'image matricielle ou d'image vectorielle chaque image des étapes dudit morphing. Chaque image créée par le procédé de morphing pouvant être utilisée comme emoticone d'une expression particulière et incorporée à la base de données.

14. Programme d'ordinateur comprenant des instructions de code de programme pour l'exécution des étapes du procédé selon l'une quelconque des revendications précédentes, lorsque ledit programme est exécuté sur un ordinateur.

## Revendications modifiées

### Revendications modifiées conformément à la règle 137(2) CBE.

1. Procédé de traitement d'une image matricielle, comprenant des étapes consistant à :
- détecter et reconnaitre un visage dans l'image matricielle,
- détecter les contours du contenu de l'image matricielle,
- détecter dans l'image matricielle au moins l'un des éléments parmi des éléments variants et des éléments invariants,
- vectoriser ladite image matricielle,
- rastériser ladite image vectorielle, et
- redimensionner ladite image vectorielle et/ou ladite image rastérisée ;
le procédé comprenant en outre des étapes consistant à :
- enregistrer dans une mémoire sous forme de bibliothèque au moins l'une parmi :
∘ ladite image matricielle,
∘ ladite image vectorielle, et
∘ ladite image vectorielle rastérisée, et
- rendre ladite bibliothèque accessible à un logiciel de communication écrite, de type traitement de texte, réseau social, messagerie électronique, messagerie instantanée, ou communication pair à pair,
**caractérisé en ce qu'il comprend en outre des étapes consistant à :**
- enregistrer dans une base de données, au moins l'un des éléments variants ou invariants détectés, et enregistrer un attribut ou un descriptif aux éléments variants ou invariants enregistrés,
- associer l'image vectorielle rastérisée à un mot ou une expression écrite prédéfinie enregistrée dans une mémoire,
- reconnaitre dans un texte ledit mot ou ladite expression écrite prédéfinie grâce à un logiciel de traitement de texte,
- introduire dans le texte ladite image vectorielle rastérisée associée audit mot ou à ladite expression écrite, éventuellement en remplacement dudit mot ou de ladite expression écrite prédéfinie.

2. Procédé selon la revendication 1, comprenant en outre une étape de décomposition de l'image matricielle en un ensemble de couches vectorisées.

3. Procédé selon la revendication 2, dans lequel :
- l'étape de vectorisation de ladite image matricielle comprend la vectorisation en une couche de noirs, plusieurs couches de niveaux de gris, et une couche de blancs,
le procédé comprenant en outre une étape consistant à :
- sélectionner la couche des noirs pour créer ladite image vectorielle.

4. Procédé selon l'une quelconque des revendications précédentes, comprenant en outre une étape de traitement préalable de l'image matricielle comprenant au moins l'une des étapes parmi :
- dé-saturer l'image matricielle,
- filtrer l'image matricielle, et
- modifier les niveaux de luminosité de l'image matricielle en référence à des paramètres de référence enregistrés dans une mémoire.

5. Procédé selon l'une quelconque des revendications précédentes, comprenant en outre une étape consistant à filtrer l'image vectorielle pour en éliminer les détails superflus.

6. Procédé selon l'une quelconque des revendications précédentes, comprenant en outre une étape consistant à :
- remplacer dans l'image matricielle, éventuellement rastérisée, l'un au moins des éléments variants ou invariants détectés par un élément variant ou invariant correspondant, enregistré préalablement dans une base de données,
- associer automatiquement une émoticône personnalisée à un mot ou une expression écrite, reconnue grâce au logiciel de traitement de texte.

7. Procédé selon l'une quelconque des revendications précédentes, comprenant en outre une étape consistant à associer une séquence audio à ladite image vectorielle rastérisée.

8. Procédé selon l'une quelconque des revendications précédentes, comprenant en outre une étape de morphing ou de montage vidéo consistant à faire évoluer de façon dynamique une première image vers une deuxième image, dans lequel l'une au moins parmi ladite première image et ladite deuxième image est ladite image matricielle ou ladite image vectorisée.

9. Procédé selon la revendication 8, comprenant en outre une étape consistant à enregistrer sous forme d'image matricielle ou d'image vectorielle chaque image des étapes dudit morphing, chaque image créée par le procédé de morphing pouvant être utilisée comme emoticone d'une expression particulière et incorporée à la base de données.

10. Programme d'ordinateur comprenant des instructions de code de programme pour l'exécution des étapes du procédé selon l'une quelconque des revendications précédentes, lorsque ledit programme est exécuté sur un ordinateur.
